# EUROPEAN PATENT SPECIFICATION

(11) **EP 2 525 105 B1**
(45) Date of publication and mention of the grant of the patent: **02.09.2015**
(21) Application number: 12168227.2
(22) Date of filing: 16.05.2012
(51) Int. Cl.: F16B 12/20

(54) **A connecting device for components of an item of furniture**
Verbindungseinrichtung für Möbelteilen
Dispositif d'assemblage pour éléments de meubles

(30) Priority: 17.05.2011 IT PD20110156
(43) Date of publication of application: 21.11.2012
(73) Proprietor: Car S.r.l., 35127 Padova (IT)
(72) Inventor: Rovoletto, Stefano, I-30030 FOSSO' (VE) (IT)
(74) Representative: Susanetto, Carlo

(56) References cited:
- EP-A2- 1 455 096
- DE-A1- 2 711 280
- DATABASE WPI Week 200110 Thomson Scientific, London, GB; AN 2001-086816 XP002663732, -& JP 2000 329116 A (ISOGAWA SANGYO KK) 28 November 2000 (2000-11-28)

## Description

### Technical field

The present invention relates to a connecting device for components of an item of furniture, having the features set out in the preamble of the main claim.

### Technological background

In the field of production of furniture, and more generally furnishing elements, it is known to use connecting devices in order to join and clamp with respect to each other various furniture components, in particular in the form of panels used as shelves or walls, for the purpose of assembling the item of furniture and/or arranging it in a building at the desired position.

In particular, there are known tensile devices which comprise a first connecting member which is of generally cylindrical shape and which is inserted into a seat formed in a first component of the item of furniture and a second connecting member which is of pin-like shape and a first end of which is fixed in a second component of the item of furniture and the opposite end of which has a projecting head which is capable of being received and engaged by the first connecting member. The first connecting member is provided with means for engaging the head of the second connecting member so that, by acting on the first connecting member, the second connecting member is drawn inside the first connecting member, thereby obtaining the mutual approach and clamping of the two furniture components.

A first example of a device of the above-indicated type is described in DE2711280 in the name of Umberto Confalonieri & Co., in which the first connecting member comprises a fixed cylinder which is provided with a lateral hole for the introduction of the second connecting member and the engagement means comprise a disc which is coaxial with respect to the cylinder and which is coupled with the ability to rotate with respect to the cylinder and provided on an internal face thereof with a projection of helical extent so as to engage a head of the second connecting member and to drive it inside the cylinder along the helical projection in accordance with the rotation of the disc.

However, that device provides for the necessary use of a large number of different components which complicate the production and assembly thereof and increase the total costs thereof.

A second example of a device of the above-indicated type is described in EP 1455096.

That device comprises a first connecting member which is formed by a pair of coaxial discs which face each other and on the internal surfaces of which helical projections are formed, respectively, so as to be able to engage with a radially projecting head of a pin which constitutes the second connecting member.

However, the above-mentioned devices have some disadvantages, including the fact that a projection having a helical extent necessarily means that the second connecting member is engaged by the first connecting member from the periphery thereof in order subsequently to be moved slowly towards the centre by the first connecting member being rotated. This typically means that the two furniture components cannot be in mutual contact at the start of the approach and clamping operation, but instead are spaced apart by at least a few millimetres. This condition, in some situations, may be found to be disadvantageous, in particular when it is not possible or it is complicated to move the two components in a longitudinal direction defined by the pin which forms the second connecting member, taking, for example, the case in which a shelf has to be fixed between two opposing walls of an item of furniture or when one of the two components is particularly heavy, because it becomes difficult to maintain that component in a correct position of alignment whilst it is brought near and clamped with respect to the other component by acting on the connecting device, taking, for example, the case in which a work surface of a kitchen has to be fixed to a wall. In that case, it would also definitely be preferable to act on the connecting device when the heavy component has already been fitted against the other component.

### Disclosure of invention

The problem addressed by the present invention is to provide a connecting device which is structurally and functionally configured to overcome the limitations set out above with reference to the cited prior art.

In the context of that problem, an object of the invention is to provide a connecting device which is simple to use, which has good characteristics of traction resistance and which can be produced at low cost.

This problem is solved and those objects are achieved by the present invention by means of a connecting device which is produced in accordance with the appended claims.

### Brief description of the drawings

The features and advantages of the invention will be better appreciated from the detailed description of some preferred embodiments thereof which are illustrated by way of non-limiting example with reference to the appended drawings, in which:

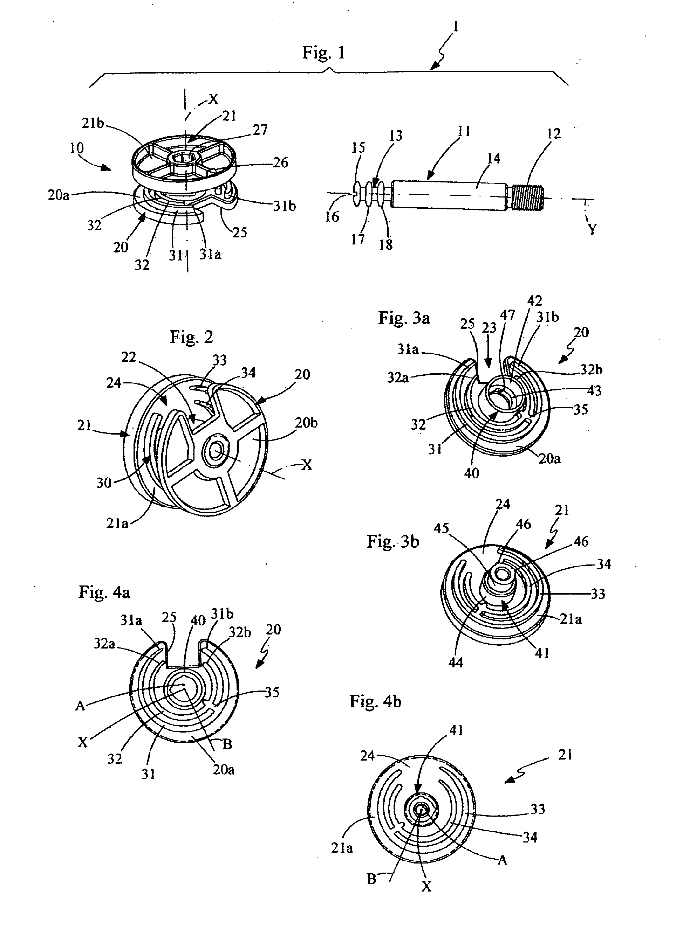

- Figure 1 is a general schematic view of a first embodiment of a connecting device constructed according to the present invention,
- Figure 2 is a different perspective view, drawn to an enlarged scale, of a first element of the device of Figure 1,
- Figures 3a and 3b are perspective views of disassembled components of the element of Figure 2,
- Figures 4a and 4b are plan views of the disassembled components of Figures 3a and 3b,
- Figures 5a to 5d are schematic views illustrating successive assembly steps of two components of an item of furniture in which the device of Figure 1 is used,

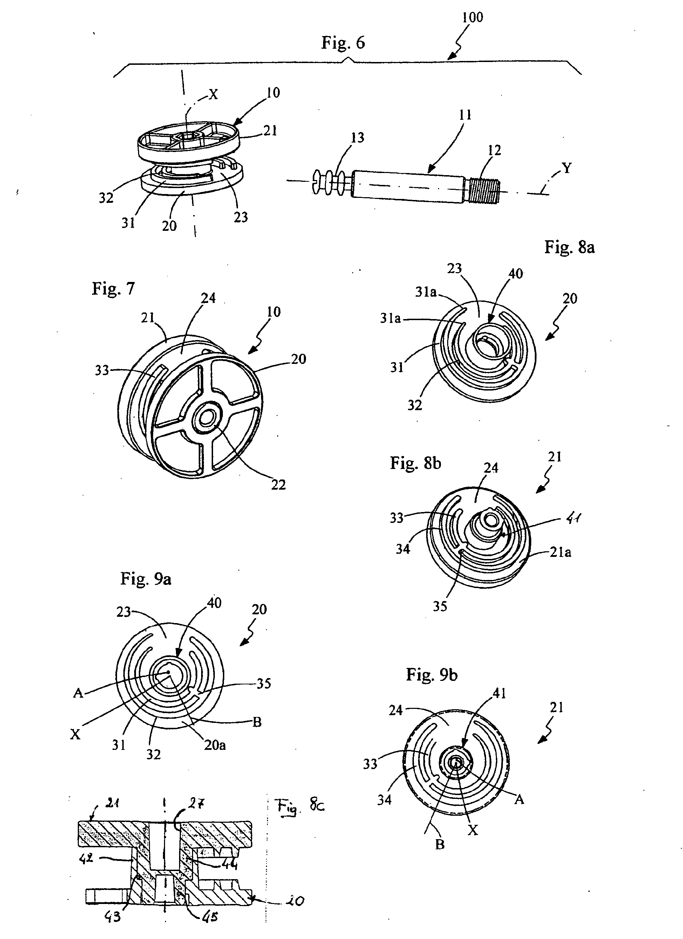

- Figure 6 is a general schematic view of a second embodiment of a connecting device constructed according to the present invention,
- Figure 7 is a different perspective view, drawn to an enlarged scale, of a first element of the device of Figure 6,
- Figures 8a and 8b are perspective views of disassembled components of the element of Figure 7,
- Figure 8c is an axial section of the element of Figure 7,
- Figures 9a and 9b are plan views of the disassembled components of Figures 8a and 8b,
- Figures 10a to 10d are schematic views illustrating successive assembly steps of two components of an item of furniture in which the connecting device of Figure 6 is used.

### Preferred embodiment of the invention

With initial reference to the Figures from 1 to 5d, there is generally designated 1 a first embodiment of a connecting device constructed according to the present invention.

The connecting device 1 is provided to join and clamp together a first and a second component of an item of furniture, generally illustrated herein by a first panel 2 and a second panel 3 which are orientated perpendicularly relative to each other, respectively.

It will be appreciated that the first and second components of the item of furniture may be formed differently and may be positioned for connection in accordance with any other arrangement.

The connecting device 1 comprises a first connecting member 10 which is of generally cylindrical shape and has a diameter between 20 and 35 mm, preferably of 35 mm, and which is provided with a main axis X and can be received in a seat 4 which is formed in the first panel 2 with the ability to rotate about the main axis X. The seat 4 is open in the region of a surface 2a of the first panel 2 and is closed in the region of the opposite surface 2b in such a manner as to allow the introduction of the first connecting member 10 with the main axis X orientated substantially perpendicularly relative to the surface 2a.

The seat 4 is further formed in the region of an edge 5 of the first panel 2, where a hole 6 which communicates with the seat 4 is provided.

The connecting device 1 further comprises a second connecting member 11 which is generally of pin-like form and which extends along a longitudinal axis Y, a first end 12 of which is capable of being engaged in the second panel 3, for example, by screwing the first end 12 which is advantageously threaded so as to project from a surface 3a of the second panel 3 in the longitudinal axis Y with an opposite second end 13 thereof which is capable of engaging with the first connecting member 10.

The first connecting member 10 comprises an inner disc 20 which is intended to be supported on the base wall of the seat 4 and an outer disc 21 which is intended to be directed towards the exterior of the surface 2a of the first panel 2. The inner and outer discs 20, 21 are mutually parallel and coaxial with respect to the main axis X and there are defined, on each of them, a first surface (designated 20a and 21a on the two discs, respectively) which is directed towards the other disc and a second surface (designated 20b and 21b on the two discs, respectively) which is directed away from the other disc, respectively.

The inner and outer discs 20, 21 are further joined together by a central pin 22 which extends along the main axis X.

The second connecting member 11 comprises a rod 14 and, in the region of the second end 13, a head 15 which projects radially from the rod 14 and on which there is formed a seat 16 which is capable of engagement with a screwing tool such as, for example, a screwdriver.

Furthermore, still in the region of the second end 13, there are preferably provided two annular wings 17 and 18 which project radially from the rod 14 in a similar manner to the head 15 and which are uniformly spaced apart from the head 15.

There are provided on at least one of the inner and outer discs 20, 21 engagement means 30 of the second end 13 of the second connecting member 11, which are provided in the manner set out below to engage with the second connecting member 11 and to drive it between the inner and outer discs 20, 21 in a direction parallel with the longitudinal axis Y towards the central pin 22 in accordance with a rotation of the first connecting member 10 about the main axis X, thereby bringing about the clamping of the first panel 2 against the second panel 3.

The engagement means 30 comprise a first and a second projection 31 and 32 which extend from the first surface 20a of the inner disc 20 towards the disc 21 and which extend in accordance with circumferential arcs which have the same centre A which is displaced with respect to the main axis X and a different diameter, respectively. In particular, the second projection 32 has a diameter smaller than that of the first projection 31.

Each projection 31 and 32 extends from the first surface 20a to a height of from 1 to 3 mm.

There is defined on each projection 31, 32 an initial end which is provided with a tapered cross-section and which is designated 31a and 32a and a final end which is designated 31b and 32b, respectively.

In the preferred embodiment described here, there are formed on the first surface 21a of the outer disc 21 additional projections 33 and 34 which are generally reflectively symmetrical with respect to the first and second projections 31, 32 and for a description of which reference may be made to the description set out for the projections 31 and 32.

In an alternative version which is not illustrated, however, there is provision for the projections to be provided only on one of the two discs 20 and 21.

The spacing between the first surfaces 20a, 21a is advantageously greater than the radial dimension of the head 15 and the annular wings 17 and 18 whilst the spacing between the projections 31 and 33 or between projections 32 and 34 is less than the above-mentioned radial dimension. Furthermore, the spacing between the first projection 31 and the second projection 32 is greater than the thickness of the head 15 and the annular wings 17, 18.

The initial ends 31a, 32a and final ends 31b, 32b of the projections 31 and 32 are spaced apart from each other so that there are defined between them on the first surfaces 20a and 21a free portions 23, 24, respectively, in the region of which the passage of the second end 13 of the second connecting member 11, in particular the head 15 and the wings 17 and 18, is allowed towards and away from the central pin 22, between the discs 20, 21, in a direction perpendicular to the main axis X.

According to a first aspect of the present invention, the centre A of the circumferential arcs defined by the projections 31 and 32 is displaced with respect to the main axis X by a distance of from 0.5 to 2 mm in a direction substantially in alignment with the initial end 31a, thereby defining at a diametrically opposed side the angular position of maximum traction B, as better explained above.

In order to block the sliding of the head 15 or the annular wings 17, 18 along the projections 31, 32 in a predefined stop position, there is further provided a stop member 35 which extends in a substantially radial direction between the projections 31 and 32.

The stop member 35 is preferably provided at an angular distance from the initial end 31a or 32a greater than 180° so that the head 15 or the annular wings 17, 18 can be driven in a sliding manner along the projections 31 and 32 beyond the position of maximum traction B.

According to another feature of the invention, there is formed in the inner disc 20 at the free portion 23, an opening 25 which has an open perimeter and which extends between the initial ends 31a, 32a and final ends 31b and 32b of the projections 31, 32 as far as a location near the central pin 22 so as to allow the introduction of the second end 13 of the second connecting member 11 between the discs 20, 21 in a direction parallel with the main axis X.

There is preferably provided, on the second surface 21b of the outer disc 21, an indicator 26, for example, in the form of an arrow, which is aligned parallel with the main axis X with respect to the opening 25 so as to be able to unambiguously identify the positioning of the opening 25 even when the first connecting member is received in the seat 4.

A seat 27 which is capable of being engaged by a tool which can be handled by an operator, for example, an Allen type key 28, in order to control the rotation of the first connecting member 10 is again further formed in alignment with the main axis X on the second surface 21b of the outer disc 21.

The central pin 22 is formed by the coupling of a first sleeve 40 which extends from the first surface 20a of the inner disc 20 with a second sleeve 41 which extends from the first surface 21 of the outer disc 21.

The first sleeve 40 comprises an external portion 42 which has a greater cross-section and height and an internal portion 43 which has a smaller cross-section and height, whilst the second sleeve 41 comprises an external portion 44 which has a greater cross-section and smaller height and an internal portion 45 which has a smaller cross-section and greater height.

In particular, the first and the second sleeves 40, 41 have such dimensions that the external portion 42 of the first sleeve 40 is fitted on the external portion 44 of the second sleeve 41 in abutment against the first surface 21a of the second disc 21, the external portion 44 of the second sleeve 41 is in abutment against the internal portion of the first sleeve and the internal portion 45 of the second sleeve 41 is inserted in the internal portion 43 of the first sleeve 40.

Furthermore, in order to assemble the two discs 20 and 21 in accordance with the desired angular orientation, that is to say, with the pairs of projections 31, 32 and 33, 34 in alignment with respect to the main axis X, and in order to prevent the relative rotation thereof about the main axis X, splined coupling means and counter-means 46, 47 are provided on the internal portions 43 and 45 of the sleeves 40, 41, respectively.

The first connecting member 10 is obtained by assembling the two inner and outer discs 20, 21 which are separately obtained by punching metal material, for example, of the zama zinc alloy type (otherwise known as zamak) in the region of the first and second sleeves 40, 41 so as to form the central pin 22.

It will be appreciated that the specific structure of the central pin 22 allows excellent traction resistance values of the connecting device 1 to be obtained, substantially improving the effectiveness levels of the conventional connecting devices in which, with other conditions being the same, the central pin was formed by coupling two cylindrical sleeves having the same diameter, head against head, without providing for the external portion 42 of the first sleeve 40. Surprisingly, that arrangement allows maximum traction resistance values to be obtained that are even greater than double those of a similar device having a central pin which is formed in conventional manner.

The assembly of the first panel 2 with the second panel 3 by means of the connecting device 1 is brought about as follows.

Firstly, the second connecting member 11 is fixed to the second panel 3 by means of the first end 12 thereof which is threaded, with the optional assistance of a screwdriver which can be engaged in the seat 16 formed on the head 15.

At the end of that step, the second connecting member 11 projects longitudinally from the surface 3a of the second panel 3 with the first end 12 and a large portion of the rod 14.

The first panel 2 is then brought near the second panel 3, taking care to insert the projecting portion of the second connecting member 11 into the hole 6 which is formed in the edge 5 of the first panel 2 in such a manner that the second end 13 of the second connecting member 11 is introduced into the seat 4.

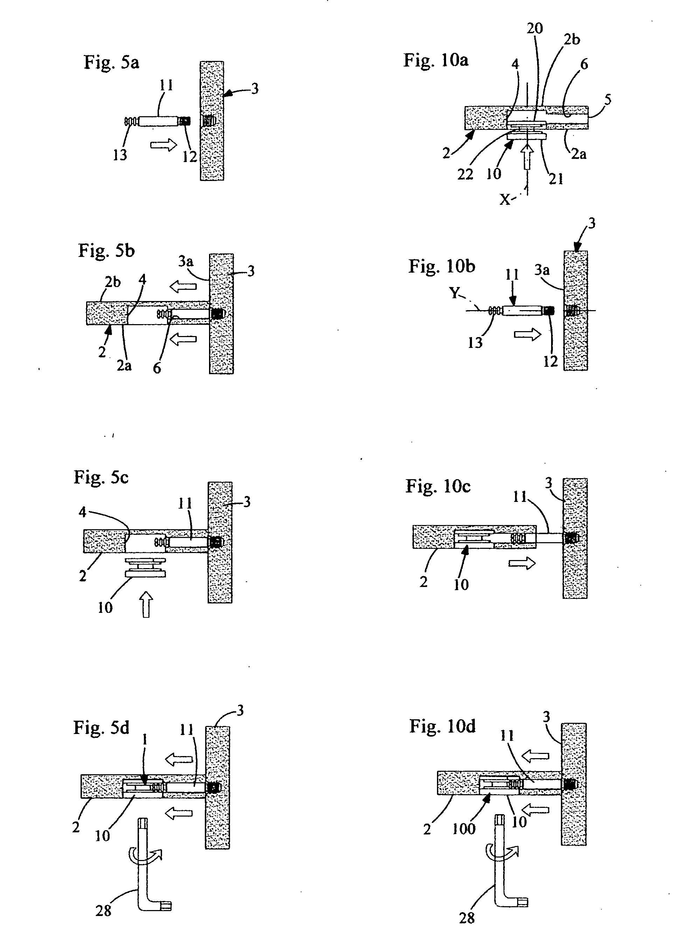

At that point, the first connecting member 10 is inserted into the seat 4 with the inner disc 20 directed towards the bottom of the seat itself and with the opening 25 aligned in relation to the second end 13 of the second connecting member 11, use being made of the indicator 26 (see Figure 5c). In that manner, the second end 13 is received between the two discs 20 and 21.

Naturally, the seat 4 has to be formed at such a distance from the edge 5 that the second connecting member 11 is introduced into the seat 4 by such a distance that the head 15 and preferably also an annular wing 17 are in alignment with the projections 31, 32.

Therefore, the clamping of the connecting device 1 provides for the rotation of the first connecting member 10 about the main axis X which is obtained, for example, by means of the Allen type key 28. In accordance with the rotation movement, the head 15 and the annular wing 17 are engaged by the second projection 32 and the first projection 31, respectively, and, owing to the eccentricity of the projections 31, 32 with respect to the main axis X, the second end 13 is moved radially towards the central pin 22 as far as the maximum traction position B.

In the preferred case described here, in which the maximum traction position B is substantially in diametrical opposition with respect to the initial end 31a of the first projection 31, it is possible for the second end 13 to be moved radially towards the central pin 22 by a distance equal to double the distance of the centre A from the axis X.

The first connecting member 10 is driven in rotation until the head 15 and/or the annular wing 17 abut the stop member 35 which is advantageously positioned slightly beyond the maximum traction position B.

It will be noted that the provision of a pair of projections both on the inner disc 20 and on the outer disc 21 improves the total traction resistance of the connecting device 1 as well as absorbing any positioning errors of the seat 4 on the first panel 2.

It will further be noted that the provision of the opening 25 advantageously allows insertion of the first connecting member 10 in the seat 4 even after the panels 2 and 3 have been brought together.

In order to disassemble the panels 2 and 3, it is simply necessary to rotate the first connecting member 10 in the opposite direction until the indicator 26 is aligned with the longitudinal axis Y and then the panels 2 and 3 can be moved away from each other so that the second connecting member 11 becomes unscrewed from the first connecting member 10 via the free portion 23, 24.

The Figures from 6 to 10d illustrate a second embodiment of the invention which is generally designated 100 and in which similar elements are identified with the same reference numerals used in the preceding embodiment.

The device 100 differs from the device 1 in that the inner disc 20 of the first connecting member 10 does not make any provision for an opening in the region of the free portion 23.

In that case, the free portion 23 of the inner disc 20 is generally similar to the free portion 24 defined on the outer disc 21 and the introduction of the second end 13 of the second connecting member 11 may occur only when the first connecting member 10 is already introduced into the seat 4. However, the second connecting member 11 remains unchanged. Therefore, the present invention solves the problem set out above with reference to the cited prior art, affording a number of other advantages at the same time, including the fact of allowing more versatile use and providing greater traction resistance characteristics.

## Claims

1. A connecting device for components of an item of furniture, comprising:
- a first connecting member (10) which is of generally cylindrical shape and provided with a main axis (X) and which is capable of being received in a seat (4) formed in a first component (2) of the item of furniture with the ability to rotate about the main axis,
- a second connecting member (11) which is in the general form of a pin and extends along a longitudinal axis (Y) and a first end (12) of which is capable of being engaged in a second component (3) of the item of furniture, and an opposite second end (13) of which is capable of engaging with the first connecting member,
in which the first connecting member (10) comprises an
inner disc (20) and an outer disc (21) which are parallel and coaxial with each other and on each of which there are defined a first surface (20a, 21a) and a second surface (20b, 21b) which face respectively towards and away from the other of the discs, the inner and outer discs being joined together by a central pin (22) extending along the main axis (X), there being provided on at least one of the inner and outer discs means (30) for coupling the second end of the second connecting member in order to couple the second connecting member and drive it in a direction parallel with the longitudinal axis towards the central pin between the inner and outer discs as a result of a rotation of the first connecting member about the main axis of rotation in order to clamp the first furniture component against the second furniture component,
**characterized in that** the coupling means (30) comprise a first projection (31) rising from the first surface (20a, 21a) of at least one of the inner (20) and outer (21) discs, the first projection extending in a circumferential arc having a centre (A) displaced with respect to the main axis (X) of the first connecting member.

2. A connecting device according to claim 1, wherein the first projection (31) extends along the circumferential arc between an initial end (31a) and a final end (31b), which are spaced from each other, in order to define therebetween a free portion (23) of the at least one of the inner and outer discs, at which free portion (23) the second end (13) of the second connecting member (11) is permitted to pass from and to the central pin (22) in a direction perpendicular to the main axis.

3. A connecting device according to either of the preceding claims, wherein, in a predefined position of the inner or outer disc, there is provided a stop member (35), which is transverse with respect to the first projection, in order to block, at the predefined position, the sliding of the second end of the second connecting member along the first projection.

4. A connecting device according to claim 3, wherein the stop member (35) is arranged at an angular distance from the initial end (31a) of the first projection (31) greater than 180°.

5. A connecting device according to any one of claims 2 to 4, wherein the centre (A) of the circumferential arc is displaced from the main axis (X) in such a manner as to be in substantial radial alignment with the initial end (31a).

6. A connecting device according to any one of the preceding claims, wherein the centre (A) of the circumferential arc is displaced from the main axis (X) of the first connecting member by a distance of from 0.5 to 2 mm.

7. A connecting device according to any one of the preceding claims, wherein there is formed on the at least one inner or outer disc a second projection (32) extending in a similar manner to the first projection along a circumferential arc having the same centre as the first projection and a smaller diameter.

8. A connecting device according to claim 7, wherein the second projection (32) is interrupted at the free portion (23).

9. A connecting device according to either claim 7 or claim 8, wherein the second connecting member (11) comprises a rod (14) and, at the second end (13), at least one head (15) protruding radially from the rod, the first and second projections (31, 32) being spaced from each other by a distance greater than the thickness of the head.

10. A connecting device according to claim 9, wherein, at the head (15), the second connecting member (11) has a transverse measurement, perpendicular to the longitudinal axis (Y), smaller than the distance between the first surfaces (20a, 21a) of the inner and outer discs (20, 21) and greater than the distance between the first projection (31) and the first surface of the other of the inner and outer discs.

11. A connecting device according to any one of the preceding claims, wherein the first projection (31) rises from the first surface to a height of from 1 to 3 mm.

12. A connecting device according to any one of claims 2 to 11, wherein an opening (25) is formed in the inner disc (20) at the free portion (23) in order to permit the introduction of the second end (13) of the second connecting member (11) between the inner and outer discs (20, 21) in a direction parallel with the main axis (X).

13. A connecting device according to any one of claims 7 to 12, wherein the first projection (31) and/or the second projection (32) is/are formed in a reflectively symmetrical manner both on the inner disc (20) and on the outer disc (21).

14. A connecting device according to any one of the preceding claims, wherein the central pin (22) is formed by the coupling of a first sleeve (40) extending from one of the inner and outer discs and a second sleeve (41) extending from the other of the inner and outer discs, wherein there are defined in the first sleeve an outer portion (42) having a larger cross-section and height and an inner portion (43) having a smaller cross-section and height and there are defined in the second sleeve an outer portion (44) having a smaller cross-section and height and an inner portion (45) having a larger cross-section and height, the first and second sleeves being dimensioned in such a manner that:
- the outer portion (42) of the first sleeve (40) is fitted on the outer portion (44) of the second sleeve (41) in order to engage the first surface (20a, 21a) of the other of the inner and outer discs,
- the outer portion (44) of the second sleeve (41) abuts the inner portion (43) of the first sleeve (40), and
- the inner portion (45) of the second sleeve (41) is inserted in the inner portion (43) of the first sleeve (40).

15. A connecting device according to claim 14, wherein there are provided on the respective inner portions (43, 45) of the first and second sleeves (40, 41) splined coupling means (46, 47) for preventing the relative rotation of the inner and outer discs (20, 21) about the main axis (X).

## Patentansprüche

1. Verbindungsvorrichtung für Teile von Möbelstücken, umfassend:
- ein erstes Verbindungselement (10), das üblicherweise zylindrisch ist und mit einer Hauptachse (X) versehen ist, und das in einem Sitz (4) aufgenommen werden kann, der in einem ersten Teil (2) des Möbelstücks ausgebildet ist, um sich um die Hauptachse herum drehen zu können,
- ein zweites Verbindungselement (11), dass die übliche Form eines Stifts aufweist und sich entlang einer Longitudinalachse (Y) erstreckt, und ein erstes Ende (12) aufweist, das mit einem zweiten Teil (3) des Möbelstücks in Eingriff stehen kann, und ein gegenüberliegendes zweites Ende (13) aufweist, das mit dem ersten Verbindungselement in Eingriff stehen kann,
- in der das erste Verbindungselement (10) eine innere Scheibe (20) und eine äußere Scheibe (21) aufweist, die parallel und koaxial zueinander sind, und wobei auf jeder von ihnen eine erste Fläche (20a, 21a) und eine zweite Fläche (20b, 21 b) definiert ist, die jeweils der anderen der Scheiben zugewandt und weg von diesen angeordnet sind, wobei die inneren und äußeren Scheiben durch einen mittleren Stift (20), der sich entlang der Hauptachse (X) erstreckt, zusammen verbunden sind, wobei zumindest eine der inneren und äußeren Scheibeneinrichtungen (30) zum Verbinden des zweiten Endes des zweiten Verbindungselements vorgesehen ist, um das zweite Verbindungselement zu verbinden, und um es in eine Richtung parallel zur Longitudinalachse zum mittleren Stift zwischen den inneren und äußeren Scheiben infolge einer Drehung des ersten Verbindungselements um die Hauptdrehachse herum zu betätigen, um das erste Möbelteil mit dem zweiten Möbelteil festzuklemmen,
**dadurch gekennzeichnet, dass** die Verbindungseinrichtung (30) einen ersten Vorsprung (31) aufweist, der sich von der ersten Fläche (20a, 21a) von zumindest einer der inneren (20) und äußeren (21) Scheiben erhebt, wobei sich der erste Vorsprung in einen umlaufenden Kreisbogen mit einem Mittelpunkt (A) erstreckt, der bezüglich der Hauptachse (X) des ersten Verbindungselements versetzt ist.

2. Verbindungsvorrichtung gemäß Anspruch 1, wobei sich der erste Vorsprung (31) entlang des umlaufenden Kreisbogens zwischen einem Anfangsende (31a) und einem Schlussende (31 b) erstreckt, die von einander beabstandet sind, um dazwischen einen freien Bereich (23) von der zumindest einen der inneren und äußeren Scheiben zu definieren, wobei dem zweiten Ende (13) des zweiten Verbindungselements (11) an diesen freien Bereichen (23) ermöglicht wird, um vom und zum mittleren Stift (2) in eine Richtung, die senkrecht zur Hauptachse ist, überzugehen.

3. Verbindungsvorrichtung gemäß einem der vorhergehenden Ansprüche, wobei in einer vorbestimmten Position der inneren oder äußeren Scheibe ein Anschlagelement (35) vorgesehen ist, das bezüglich des ersten Vorsprungs diagonal ist, um das Gleiten des zweiten Endes des zweiten Verbindungselements entlang des ersten Vorsprungs an der vorbestimmten Position zu sperren.

4. Verbindungsvorrichtung gemäß Anspruch 3, wobei das Anschlagelement (35) mit einem Winkelabstand, der größer als 180° ist, vom Anfangsende (31a) des ersten Vorsprungs (31) angeordnet ist.

5. Verbindungsvorrichtung gemäß einem der Ansprüche 2 bis 4, wobei der Mittelpunkt (A) des umlaufenden Kreisbogens von der Hauptachse (X) in der Weise versetzt ist, um so in einer im Wesentlichen radialen Ausrichtung mit dem Anfangsende (31a) zu sein.

6. Verbindungsvorrichtung gemäß einem der vorhergehenden Ansprüche, wobei der Mittelpunkt (A) des umlaufenden Kreisbogens von der Hauptachse (X) des ersten Verbindungselements um einen Abstand von 0,5 bis 2 mm versetzt ist.

7. Verbindungsvorrichtung gemäß einem der vorhergehenden Ansprüche, wobei zumindest auf der inneren oder äußeren Scheibe ein zweiter Vorsprung (32) ausgebildet ist, der sich in ähnlicher Weise zum ersten Vorsprung entlang eines umlaufenden Kreisbogens erstreckt, der denselben Mittelpunkt wie der erste Vorsprung und einen kleineren Durchmesser aufweist.

8. Verbindungsvorrichtung gemäß Anspruch 7, wobei der zweite Vorsprung (32) am freien Bereich (23) unterbrochen ist.

9. Verbindungsvorrichtung gemäß Anspruch 7 oder 8, wobei das zweite Verbindungselement (11) einen Stab (14) und am zweiten Ende (13) zumindest einen Kopf (15) aufweist, der radial vom Stab hervorsteht, wobei die ersten und zweiten Vorsprünge (31, 32) um einen Abstand, der größer als die Dicke des Kopfes ist, voneinander beabstandet sind.

10. Verbindungsvorrichtung gemäß Anspruch 9, wobei das zweite Verbindungselement (11) am Kopf (15) ein diagonales Maß aufweist, das senkrecht zur Longitudinalachse (Y) ist, kleiner als der Abstand zwischen den ersten Flächen (20a, 21a) der inneren und äußeren Scheiben (20, 21) ist, und größer als der Abstand zwischen dem ersten Vorsprung (31) und der ersten Fläche der anderen der inneren und äußeren Scheiben ist.

11. Verbindungsvorrichtung gemäß einem der vorhergehenden Ansprüche, wobei der erste Vorsprung (31) von der ersten Fläche zu einer Höhe von 1 bis 3 mm ansteigt.

12. Verbindungsvorrichtung gemäß einem der Ansprüche 2 bis 11, wobei eine Öffnung (25) in der inneren Scheibe (20) am freien Bereich (23) ausgebildet ist, um die Einführung des zweiten Endes (13) des zweiten Verbindungselements (11) zwischen den inneren und äußeren Scheiben (20, 21) in eine Richtung, die parallel mit der Hauptachse (X) ist, zu ermöglichen.

13. Verbindungsvorrichtung gemäß einem der Ansprüche 7 bis 12, wobei der erste Vorsprung (31) und/oder der zweite Vorsprung (32) in einer reflektierenden symmetrischen Weise sowohl auf der inneren Scheibe (20) als auch auf der äußeren Scheibe (21) ausgebildet ist/sind.

14. Verbindungsvorrichtung gemäß einem der vorhergehenden Ansprüche, wobei der mittlere Stift (22) durch die Verbindung einer ersten Hülse (40), die sich von einer der inneren und äußeren Scheiben erstreckt und einer zweiten Hülse (41), die sich von der anderen der inneren und äußeren Scheiben erstreckt, ausgebildet ist, wobei ein äußerer Bereich (42) mit einem größeren Querschnitt und einer Höhe und ein innerer Bereich (43) mit einem kleineren Querschnitt und einer Höhe in der erste Hülse definiert sind, und ein äußerer Bereich (44) mit einem kleineren Querschnitt und einer Höhe und ein innerer Bereich (45) mit einem größeren Querschnitt und einer Höhe in der zweiten Hülse definiert sind, wobei die ersten und zweiten Hülsen in der Weise dimensioniert sind, dass:
- der äußere Bereich (42) der ersten Hülse (40) auf dem äußeren Bereich (44) der zweiten Hülse (41) eingepasst ist, um mit der ersten Fläche (20a, 21a) der anderen der inneren und äußeren Scheiben in Eingriff zu stehen,
- der äußere Bereich (44) der zweiten Hülse (41) am inneren Bereich (43) der ersten Hülse (40) anliegt, und
- der innere Bereich (45) der zweiten Hülse (41) in den inneren Bereich (43) der ersten Hülse (40) eingesetzt ist.

15. Verbindungsvorrichtung gemäß Anspruch 14, wobei auf den jeweiligen inneren Bereichen (43, 45) der ersten und zweiten Hülsen (40, 41) Verbindungseinrichtungen (46, 47) mit Kerbverzahnung vorgesehen sind, um die relative Drehung der inneren und äußeren Scheiben (20, 21) um die Hauptachse (X) herum zu verhindern.

## Revendications

1. Dispositif de raccordement pour composants d'un meuble, comprenant :
- un premier élément de raccordement (10) qui a une forme généralement cylindrique et est prévu avec un axe principal (X) et qui est capable d'être reçu dans un siège (4) formé dans un premier composant (2) du meuble avec la capacité de tourner autour de l'axe principal,
- un second élément de raccordement (11) qui se présente sous la forme générale d'une broche et s'étend le long d'un axe longitudinal (Y) et dont une première extrémité (12) peut être mise en prise dans un second composant (3) du meuble, et dont une seconde extrémité (13) opposée peut être mise en prise avec le premier élément de raccordement,
dans lequel le premier élément de raccordement (10) comprend un disque interne (20) et un disque externe (21) qui sont parallèles et coaxiaux entre eux et sur chacun desquels, on définit une première surface (20a, 21a) et une seconde surface (20b, 21b) qui se font respectivement face et sont éloignées des autres disques, des disques interne et externe étant assemblées par une broche centrale (22) s'étendant le long de l'axe principal (X), sur au moins l'un des disques interne et externe, on prévoit des moyens (30) pour coupler la seconde extrémité du second élément de raccordement afin de coupler le second élément de raccordement et l'entraîner dans une direction parallèle à l'axe longitudinal vers la broche centrale entre les disques interne et externe suite à une rotation du premier élément de raccordement autour de l'axe principal de rotation afin de serrer le premier composant de meuble contre le second composant de meuble,
**caractérisé en ce que** les moyens de couplage (30) comprennent une première saillie (31) montant à partir de la première surface (20a, 21a) d'au moins l'un parmi les disques interne (20) et externe (21), la première saillie s'étendant dans un arc circonférentiel ayant un centre (A) déplacé par rapport à l'axe principal (X) du premier élément de raccordement.

2. Dispositif de raccordement selon la revendication 1, dans lequel la première saillie (31) s'étend le long de l'arc circonférentiel entre une extrémité initiale (31a) et une extrémité finale (31b) qui sont espacées l'une de l'autre, afin de définir entre elles, une partie libre (23) d'au moins l'un des disques interne et externe, au niveau de laquelle partie libre (23), la seconde extrémité (13) du second élément de raccordement (11) est autorisée à passer par et vers la broche centrale (22) dans une direction perpendiculaire à l'axe principal.

3. Dispositif de raccordement selon l'une ou l'autre des revendications précédentes, dans lequel, dans une position prédéfinie du disque interne ou externe, on prévoit un élément de butée (35) qui est transversal par rapport à la première saillie, afin de bloquer, dans la position prédéfinie, le coulissement de la seconde extrémité du second élément de raccordement le long de la première saillie.

4. Dispositif de raccordement selon la revendication 3, dans lequel l'élément de butée (35) est agencé à une distance angulaire de l'extrémité initiale (31a) de la première saillie (31) supérieure à 180°.

5. Dispositif de raccordement selon l'une quelconque des revendications 2 à 4, dans lequel le centre (A) de l'arc circonférentiel est déplacé par rapport à l'axe principal (X) afin d'être en alignement sensiblement radial avec l'extrémité initiale (31a).

6. Dispositif de raccordement selon l'une quelconque des revendications précédentes, dans lequel le centre (A) de l'arc circonférentiel est déplacé par rapport à l'axe principal (X) du premier élément de raccordement selon une distance de 0,5 à 2 mm.

7. Dispositif de raccordement selon l'une quelconque des revendications précédentes, dans lequel on forme sur le au moins un disque interne ou externe, une seconde saillie (32) s'étendant d'une manière similaire à la première saillie le long d'un arc circonférentiel ayant le même centre que la première saillie, et un plus petit diamètre.

8. Dispositif de raccordement selon la revendication 7, dans lequel la seconde saillie (32) est interrompue au niveau de la partie libre (23).

9. Dispositif de raccordement selon la revendication 7 ou la revendication 8, dans lequel le second élément de raccordement (11) comprend une tige (14) et, au niveau de la seconde extrémité (13), au moins une tête (15) faisant saillie radialement de la tige, les première et seconde saillies (31, 32) étant espacées l'une de l'autre par une distance supérieure à l'épaisseur de la tête.

10. Dispositif de raccordement selon la revendication 9, dans lequel, au niveau de la tête (15), le second élément de raccordement (11) a une mesure transversale, perpendiculaire à l'axe longitudinal (Y), inférieure à la distance située entre les premières surfaces (20a, 21a) des disques interne et externe (20, 21) et supérieure à la distance située entre la première saillie (31) et la première surface de l'autre des disques interne et externe.

11. Dispositif de raccordement selon l'une quelconque des revendications précédentes, dans lequel la première saillie (31) monte à partir de la première surface jusqu'à une hauteur de l'ordre de 1 à 3 mm.

12. Dispositif de raccordement selon l'une quelconque des revendications 2 à 11, dans lequel une ouverture (25) est formée dans le disque interne (20) au niveau de la partie libre (23) afin de permettre l'introduction de la seconde extrémité (13) du second élément de raccordement (11) entre les disques interne et externe (20, 21), dans une direction parallèle à l'axe principal (X).

13. Dispositif de raccordement selon l'une quelconque des revendications 7 à 12, dans lequel la première saillie (31) et/ou la seconde saillie (32) est/sont formée(s) d'une manière symétrique en miroir à la fois sur le disque interne (20) et sur le disque externe (21).

14. Dispositif de raccordement selon l'une quelconque des revendications précédentes, dans lequel la broche centrale (22) est formée par le couplage d'un premier manchon (40) s'étendant à partir de l'un des disques interne et externe et d'un second manchon (41) s'étendant à partir de l'autre des disques interne et externe, dans lequel on définit, dans le premier manchon, une partie externe (42) ayant une section transversale et une hauteur plus grandes et une partie interne (43) ayant une section transversale et une hauteur plus petites, et on définit dans le second manchon, une partie externe (44) ayant une section transversale et une hauteur plus petites et une partie interne (45) ayant une section transversale et une hauteur plus grandes, les premier et second manchons étant dimensionnés de sorte que :
- la partie externe (42) du premier manchon (40) est montée sur la partie externe (44) du second manchon (41) afin de mettre en prise la première surface (20a, 21a) de l'autre des disques interne et externe,
- la partie externe (44) du second manchon (41) vient en butée contre la partie interne (43) du premier manchon (40), et
- la partie interne (45) du second manchon (41) est insérée dans la partie interne (43) du premier manchon (40).

15. Dispositif de raccordement selon la revendication 14, dans lequel on prévoit, sur les parties internes (43, 45) respectives des premier et second manchons (40, 41) cannelés, des moyens de couplage (46, 47) pour empêcher la rotation relative des disques interne et externe (20, 21) autour de l'axe principal (X).
